(19) Europäisches Patentamt
European Patent Office
Office européen des brevets

(11) **EP 2 889 845 A2**

(12) **DEMANDE DE BREVET EUROPEEN**

(43) Date de publication:
**01.07.2015 Bulletin 2015/27**

(51) Int Cl.:
**G06T 19/20** (2011.01)  **G06T 5/50** (2006.01)
**G06T 15/08** (2011.01)

(21) Numéro de dépôt: **14199487.1**

(22) Date de dépôt: **19.12.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **24.12.2013 FR 1363569**

(71) Demandeur: **Commissariat à l'Énergie Atomique et aux Énergies Alternatives**
**75015 Paris (FR)**

(72) Inventeurs:
• **Durand, Pierre**
**38700 La Tronche (FR)**
• **Labyt, Etienne**
**38950 Saint Martin de Vinoux (FR)**

(74) Mandataire: **Blot, Philippe Robert Emile**
**Cabinet Lavoix**
**2, place d'Estienne d'Orves**
**75441 Paris Cedex 09 (FR)**

(54) **Procédé de traitement d'un modèle volumique, produit programme d'ordinateur et système de traitement associés**

(57) Ce procédé de traitement permet de traiter un modèle volumique, notamment anatomique, avec au moins un objet destiné à être ajouté ou soustrait audit modèle. Le modèle volumique comporte un ensemble de points disposés selon un maillage spatial, dans un premier référentiel, chacun desdits points étant affecté d'une valeur d'intensité. L'objet comporte une pluralité de points positionnés dans un deuxième référentiel distinct du premier référentiel.

Le procédé comprend le calcul (120), pour chaque point de l'objet, d'un point image dans le premier référentiel à l'aide d'une fonction de transfert du deuxième référentiel vers le premier référentiel.

Le procédé comprend en outre la modification (130) de l'intensité de points du modèle volumique par l'application d'une fonction de correction associée à chaque point image, la valeur de la fonction de correction en un point du modèle volumique dépendant de la position dudit point par rapport audit point image auquel ladite fonction de correction est associée.

FIG.3

EP 2 889 845 A2

**Description**

La présente invention concerne un procédé de traitement d'un modèle volumique, notamment anatomique, avec au moins un objet destiné à être ajouté ou soustrait audit modèle. Le modèle volumique comporte un ensemble de points disposés selon un maillage spatial dans un premier référentiel, chacun desdits points étant affecté d'une valeur d'intensité. L'objet comporte une pluralité de points positionnés dans un deuxième référentiel distinct du premier référentiel.

Le procédé comprend le calcul, pour chaque point de l'objet, d'un point image dans le premier référentiel à l'aide d'une fonction de transfert du deuxième référentiel vers le premier référentiel.

L'invention concerne également un produit programme d'ordinateur comportant des instructions logicielles qui, lorsqu'elles sont mises en oeuvre par un ordinateur, mettent en oeuvre un tel procédé de traitement.

L'invention concerne également un système électronique de traitement du modèle volumique avec au moins un objet destiné à être ajouté ou soustrait audit modèle.

L'invention concerne notamment le domaine de l'imagerie médicale, telle que l'imagerie médicale en coupe dans un but chirurgical. Le modèle volumique est un modèle anatomique conforme au format DICOM (de l'anglais *Digital Imaging Communication Object Model*), et le premier référentiel est alors conforme au format DICOM. L'objet destiné à être ajouté ou soustrait au modèle anatomique est initialement enregistré dans un format distinct du format DICOM, et l'objet est un implant destiné à être inséré dans le modèle anatomique. En variante, l'objet est une partie du modèle anatomique destinée à être retirée.

Outre des données anatomiques, le premier modèle peut comprendre des données fonctionnelles, par exemple des données fonctionnelles de magnétoencéphalographie, également appelées données fonctionnelles MEG. Le premier référentiel est alors modifié pour être conforme au référentiel de Talairach.

On connaît un procédé du type précité. Le modèle volumique est un modèle anatomique, tel qu'un modèle reconstruit à partir d'images obtenues suivant une technique d'imagerie par résonance magnétique (IRM) et formé d'une pluralité plans parallèles, deux plans parallèles adjacents étant espacés d'une distance donnée, correspondant à un pas d'échantillonnage, selon une direction perpendiculaire aux plans parallèles. Chaque plan du modèle anatomique correspond à une image en coupe. Le modèle volumique est défini dans un premier référentiel, l'ensemble de points formant ce modèle étant positionné dans ce premier référentiel.

En cas d'ajout ou de soustraction à ce modèle d'un objet défini dans un deuxième référentiel distinct du premier référentiel, une fonction de transfert est appliquée à chacun des points formant l'objet afin d'effectuer le changement de référentiel du deuxième référentiel vers le premier référentiel.

Toutefois, avec un tel procédé, le rendu du modèle volumique n'est pas optimal suite à l'ajout ou à la soustraction de l'objet, l'objet ajouté ou soustrait n'étant pas toujours bien visible.

Le but de l'invention est donc de proposer un procédé et un système électronique de traitement d'un modèle volumique avec au moins un objet destiné à être ajouté ou soustrait permettant d'obtenir un meilleur rendu du modèle suite à l'ajout ou à la soustraction de l'objet, notamment de visualiser plus précisément l'objet ajouté ou soustrait lorsque le modèle volumique est un modèle d'imagerie destiné à être affiché sur un écran.

A cet effet, l'invention a pour objet un procédé de traitement d'un modèle volumique, notamment anatomique, avec au moins un objet destiné à être ajouté ou soustrait audit modèle, le modèle volumique comportant un ensemble de points disposés selon un maillage spatial, dans un premier référentiel, chacun desdits points étant affecté d'une valeur d'intensité, l'objet comportant une pluralité de points positionnés dans un deuxième référentiel distinct du premier référentiel,
le procédé comprenant le calcul, pour chaque point de l'objet, d'un point image dans le premier référentiel à l'aide d'une fonction de transfert du deuxième référentiel vers le premier référentiel ;
dans lequel le procédé comprend en outre la modification de l'intensité de points du modèle volumique par l'application d'une fonction de correction associée à chaque point image,
la valeur de la fonction de correction en un point du modèle volumique dépendant de la position dudit point par rapport audit point image auquel ladite fonction de correction est associée.

Avec le procédé de traitement selon l'invention, on applique une fonction de correction du niveau de gris (ou intensité) de tout ou partie des points constituant le modèle volumique. Plus précisément, les points du modèle volumique, et notamment les points situés au voisinage d'un point image, subissent une correction de leur intensité, la correction appliquée dépendant de leur position vis-à-vis dudit point image. Autrement dit, à chaque point image de l'objet, on établit une fonction de correction, cette dernière modulant l'intensité des points du modèle volumique, et en particulier ceux placés au voisinage du point image.

Cela permet d'améliorer le rendu du modèle volumique après ajout ou soustraction de l'objet. En effet, la fonction de correction permet d'effectuer une extrapolation autour ce chaque point image de l'objet ajouté ou soustrait au modèle volumique. On améliore alors la visibilité de l'objet dans le modèle volumique.

Cela permet de résoudre le problème de l'état de la technique qui résulte d'une différence entre la résolution spatiale de l'objet destiné à être ajouté ou soustrait et celle du modèle volumique : lorsqu'on applique la fonction de transfert à chaque point de l'objet, on obtient des points « image » de l'objet dans le premier référentiel. Du fait de la différence de maillage spatial entre les deux référentiels, certains points image peuvent ne pas apparaître sur le modèle volumique car leurs coordonnées ne correspondent pas à des centres de maille.

Plus schématiquement un modèle volumique est un ensemble de points agencés selon un maillage spatial, l'espace entre deux points adjacents du maillage, dits centres de maille, étant indéterminé. Selon le procédé de l'état de la technique, lorsqu'on ajoute un objet, en déterminant les coordonnées des points qui le constituent dans le repère du modèle volumique, certains points de l'objet ne coïncident pas avec le maillage du modèle volumique, et n'apparaissent pas sur le modèle volumique après ajout de l'objet. De ce fait, l'intégration de l'objet dans le modèle volumique est imparfaite, ce qui n'est pas admissible dans des applications nécessitant une résolution spatiale élevée, en particulier dans les applications médicales.

En complément, le modèle volumique est un modèle anatomique, et en particulier un modèle obtenu en juxtaposant des plans parallèles, ces derniers étant obtenu par une modalité d'imagerie médicale, en particulier l'IRM ou la tomographie X. Dans ce cas, le maillage du modèle dépend du maillage spatial de chaque plan, ainsi que de la distance entre deux plans adjacents. Dans ce cas, le modèle anatomique est réalisé dans un référentiel connu sous le nom de référentiel DICOM.

Suivant d'autres aspects avantageux de l'invention, le procédé de traitement comprend une ou plusieurs des caractéristiques suivantes, prises isolément ou suivant toutes les combinaisons techniquement possibles :

- le procédé comporte, pour tout ou partie des points du modèle volumique, les étapes suivantes :

    + la sommation de chaque fonction associée à chaque point image, et
    + la comparaison entre l'intensité du point avant et après application de la fonction, l'intensité la plus faible, ou respectivement la plus élevée, étant retenue en cas de soustraction, ou respectivement d'ajout, de l'objet ;

- l'objet est un objet destiné à être ajouté, et la fonction de correction - associée à chaque point image est une fonction dont la valeur, en un point du modèle, se rapproche d'autant plus de 0 que la distance entre ce point du modèle et le point image est élevée ;
- l'objet est un objet destiné à être soustrait, et la fonction de correction associée à chaque point image est une fonction dont la valeur, en un point du modèle, se rapproche d'autant plus de 0 que la distance entre ce point du modèle et le point image est faible ;
- la fonction de correction associée à un point image comporte un module correctif dépendant de la distance, notamment euclidienne, entre ledit point image et le point du modèle volumique dans le premier référentiel ;
- le module correctif dépend en outre d'un facteur d'étalement, le facteur d'étalement étant multiplié par ladite distance ;
- la valeur du facteur d'étalement est comprise entre 1 et 4 ;
- l'objet est réalisé en un matériau, et la fonction de correction est égale au module correctif multiplié par un facteur de pondération, le facteur de pondération dépendant dudit matériau ;
- le module correctif est une fonction de la distance euclidienne, fonction qui est continue, symétrique autour de la distance nulle et dont les valeurs sont comprises entre 0 et 1 ;
- lorsque l'objet est un objet destiné à être ajouté, la valeur du module correctif est égale à 1 pour une valeur nulle de la distance euclidienne entre le point image et le point du modèle volumique, et la valeur du module correctif décroît vers 0 lorsque la valeur absolue de ladite distance euclidienne augmente, et
lorsque l'objet est un objet destiné à être soustrait, la valeur du module correctif ($M_{n,i}$) st égale à 0 pour une valeur nulle de ladite distance euclidienne, et la valeur du module correctif croît vers 1 lorsque la valeur absolue de ladite distance euclidienne augmente ;
- le module correctif vérifie l'équation suivante :

$$M_{n,i}(P) = \begin{cases} e^{-\mu_n \cdot DIST(P, T_{n \to IRM}(P_{n,i}))^2}, & si\ \Gamma_n = 1 \\ (1 - e^{-\mu_n \cdot DIST(P, T_{n \to IRM}(P_{n,i}))^2}), & si\ \Gamma_n = -1 \end{cases}$$

où n est un indice d'un objet correspondant,
i est un indice d'un point de l'objet correspondant,
$P_{n,i}$ représente les coordonnées du point d'indice i de l'objet d'indice n dans le deuxième référentiel,
$T_{n \to IRM}$ représente la fonction de transfert du deuxième référentiel vers le premier référentiel,

P représente les coordonnées du point du modèle volumique dans le premier référentiel,

DIST représente la distance euclidienne dans le premier référentiel,

$\mu_n$ représente le facteur d'étalement, et

$\Gamma_n$ est un paramètre de commande, égal à 1 lorsque l'objet est un objet destiné à être ajouté, et égal à -1 lorsque l'objet est un objet destiné à être soustrait ;

- le modèle volumique est un modèle d'imagerie, tel qu'un modèle anatomique, destiné à être affiché sur un écran ;
- le modèle volumique comporte une description d'une surface corticale, le premier référentiel étant le référentiel de Talairach ; et
- le modèle volumique comporte des informations fonctionnelles, et l'étape de calcul, pour chaque point de l'objet, d'un point image dans le premier référentiel est effectuée également en fonction desdites informations fonctionnelles.

L'invention a également pour objet un produit programme d'ordinateur comportant des instructions logicielles qui, lorsqu'elles sont mises en oeuvre par un ordinateur, mettent en oeuvre un procédé de traitement tel que défini ci-dessus.

L'invention a également pour objet un système électronique de traitement d'un modèle volumique, notamment anatomique, avec au moins un objet destiné à être ajouté ou soustrait audit modèle, le modèle volumique comportant un ensemble de points disposés selon un maillage spatial dans un premier référentiel, chacun desdits points étant affecté d'une valeur d'intensité, l'objet comportant une pluralité de points positionnés dans un deuxième référentiel distinct du premier référentiel,

le système comprenant des moyens de calcul, pour chaque point de l'objet, d'un point image dans le premier référentiel à l'aide d'une fonction de transfert du deuxième référentiel vers le premier référentiel;

dans lequel le système comprend en outre des moyens de modification de l'intensité de points du modèle volumique par l'application d'une fonction de correction associée à chaque point image,

la valeur de la fonction de correction en un point du modèle volumique dépendant de la position dudit point par rapport audit point image auquel la fonction de correction est associée.

Les caractéristiques et avantages de l'invention apparaîtront à la lecture de la description qui va suivre, donnée uniquement à titre d'exemple non limitatif, et faite en référence aux dessins annexés, sur lesquels :

- la figure 1 est une représentation schématique d'un système de traitement selon l'invention, adapté pour traiter un modèle volumique avec au moins un objet à ajouter ou à soustraire audit modèle, le modèle volumique comportant une pluralité de points disposés suivant une pluralité de plans parallèles et positionnés dans un premier référentiel, l'objet comportant une pluralité de points positionnés dans un deuxième référentiel distinct du premier référentiel,
- la figure 2 est une représentation schématique de changements de référentiel successifs depuis un référentiel initial de l'objet jusqu'au référentiel du modèle volumique,
- la figure 3 est un organigramme d'un procédé de traitement selon l'invention,
- la figure 4 est un ensemble de vues en coupe du modèle volumique modifié selon l'invention après ajout/soustraction d'objets, et
- les figures 5 et 6 sont des vues en perspective du modèle volumique modifié selon l'invention après ajout/soustraction d'objets.

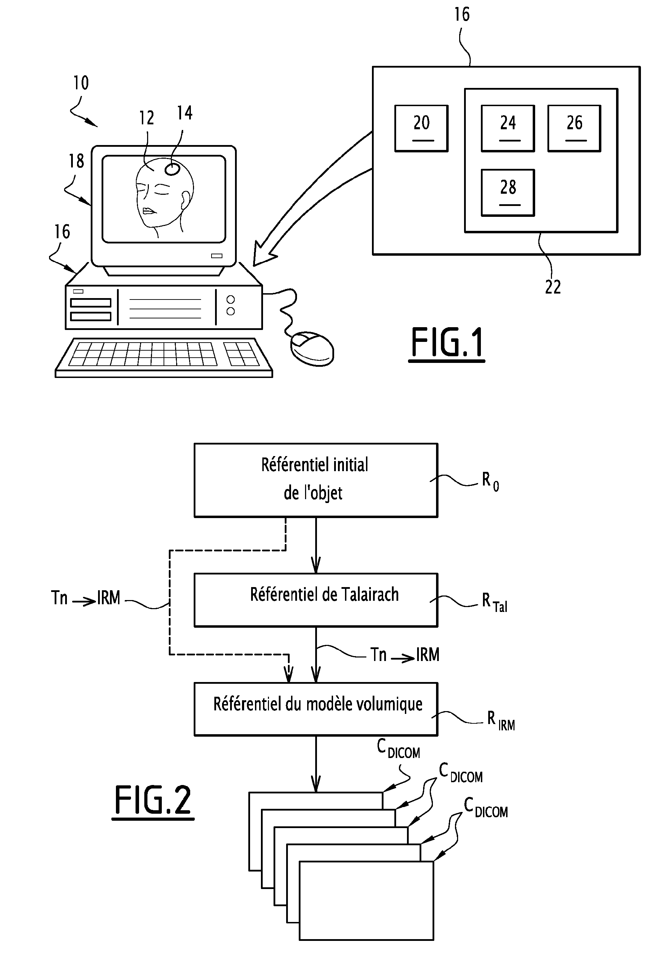

Sur la figure 1, un système électronique 10 de traitement d'un modèle volumique 12 avec au moins un objet 14 destiné à être ajouté ou soustrait audit modèle comprend une unité de traitement d'informations 16 et un écran d'affichage 18 destiné à afficher des images, telle qu'une image du modèle volumique 12, une image initiale de l'objet 14 à ajouter ou à soustraire.

Le modèle volumique 12 comporte un ensemble de points P appartenant à une pluralité de plans parallèles et positionnés dans un premier référentiel $R_{IRM}$, visible sur la figure 2. Le modèle volumique 12 présente une amplitude, telle qu'une intensité exprimée en niveaux de gris, en chacun desdits points P.

Le modèle volumique 12 est, par exemple, un modèle anatomique conforme au format DICOM, et le premier référentiel est alors conforme au format DICOM.

Plus généralement, l'invention concerne un modèle en trois dimensions comportant une pluralité de points répartis selon un maillage spatial. Chaque point est affecté d'une valeur d'intensité, tel que le niveau de gris lorsque le modèle est représenté en noir et blanc. L'intensité est, par exemple, l'intensité du point dans une ou plusieurs longueurs d'onde lorsque le modèle n'est pas monochrome.

L'objet 14, noté $S_n$, comporte une pluralité de points $P_{n,i}$ positionnés dans un deuxième référentiel $R_n$ distinct du premier référentiel $R_{IRM}$. Ainsi, dans le référentiel $R_n$, l'objet $S_n$ est constitué par un ensemble de points P*.

Le procédé objet de l'invention permet d'ajouter un objet dans le modèle volumique, auquel cas l'objet est un objet auxiliaire, ou de retirer un objet du modèle.

Lorsque l'objet n'est pas initialement compris dans le modèle, il est, par exemple, enregistré dans un format distinct du format DICOM. À titre d'exemple, l'objet est un dispositif, dit implant, destiné à être implanté dans le corps d'un patient, par exemple une prothèse, un dispositif électronique, une ou plusieurs électrodes, ou des équipements chirurgicaux de type vis, broches.... Le système de traitement 10 est adapté pour passer directement du deuxième référentiel $R_n$ au premier référentiel $R_{IRM}$ du modèle volumique.

L'unité de traitement d'informations 16, visible sur la figure 1, comporte un processeur de données 20 et une mémoire 22 associée au processeur 20.

La mémoire 22 est apte à stocker un logiciel 24 de calcul, pour chaque point $P_{n,i}$ de l'objet 14, d'un point image $T_{n->IRM}(P_{n,i})$ dans le premier référentiel $R_{IRM}$ à l'aide d'une fonction de transfert $T_{n->IRM}$ du deuxième référentiel $R_n$ vers le premier référentiel $R_{IRM}$.

Selon l'invention, la mémoire 22 est apte à stocker un logiciel 26 de modification de l'amplitude de points du modèle volumique 12 via une fonction de correction $F_{n,i}$, associée à chaque point image $T_{n->IRM}(P_{n,i})$. Cette fonction de correction $F_{n,i}$, est appliquée à chaque point du modèle, ou aux points du modèle situés au voisinage d'un point image $T_{n->IRM}(P_{n,i})$. Le voisinage d'un point image désigne les points du modèle volumique adjacents dudit point image, ou les points du modèle volumique les plus proches du point image. La valeur de la fonction de correction $F_{n,i}$ dépend de la position de chaque point du modèle 12 par rapport au point image $T_{n->IRM}(P_{n,i})$ auquel ladite fonction est associée.

En variante, les moyens de calcul 24 et les moyens de modification de l'amplitude 26 sont réalisés sous forme de composants logiques programmables, ou encore sous forme de circuits intégrés dédiés.

La fonction de correction $F_{n,i}$ est adaptée pour modifier l'amplitude de certains points P du modèle volumique 12, notamment ceux situés au voisinage du point image auquel la fonction est associée. La fonction de correction $F_{n,i}$ est de préférence adaptée pour modifier l'amplitude de chacun des points P du modèle volumique 12. Elle permet d'effectuer une modification de l'intensité des points du modèle volumique 12 autour de chaque point image, c'est-à-dire au voisinage de chaque point image.

Selon une variante, le modèle volumique en trois dimensions prend en compte des informations fonctionnelles en plus de la structure anatomique. Par exemple, lorsque le modèle anatomique décrit une surface corticale, il intègre une cartographie fonctionnelle d'activation corticale. Dans un tel cas, préalablement à la prise en compte de l'objet dans le modèle, on effectue un changement de repère, de telle sorte que le repère du modèle volumique correspond au référentiel dit de Talairach $R_{Tal}$, bien connu en neurochirurgie.

Autrement dit, selon cette variante, le premier référentiel $R_{IRM}$ est préalablement ajusté, de telle sorte que $R_{IRM}$ = $R_{Tal}$. L'intérêt de cette variante est de pouvoir positionner l'objet dans le modèle non seulement en fonction de données anatomiques structurelles, mais également en fonction de données fonctionnelles. Cette variante est particulièrement adaptée au positionnement d'électrodes de mesure ou de stimulation corticale.

La fonction de transfert $T_{n->IRM}$ mise en oeuvre par le logiciel de calcul 24 est connue en soi, le passage du deuxième référentiel $R_n$ au premier référentiel $R_{IRM}$ étant par exemple effectué à l'aide d'une matrice de changement de référentiel.

La fonction de correction $F_{n,i}$, associé à un point image du modèle volumique, peut comporter un module correctif $M_{n,i}$ dépendant d'une distance euclidienne $DIST(P, T_{n->IRM}(P_{n,i}))$ entre ledit point image $T_{n->IRM}(P_{n,i})$ et le point P du modèle volumique, cette distance euclidienne étant mesurée dans le premier référentiel $R_{IRM}$.

La distance euclidienne $DIST(A, B)$ entre des points A et B, de coordonnées $x_A$, $y_A$, $z_A$, respectivement à $x_B$, $y_B$, $z_B$, dans le premier référentiel $R_{IRM}$, vérifie l'équation suivante, comme connu en soi :

$$DIST(A, B) = \sqrt{\left\| x_A - x_B \right\|^2 + \left\| y_A - y_B \right\|^2 + \left\| z_A - z_B \right\|^2} \qquad (1)$$

La fonction de correction $F_{n,i}$ est de préférence égale au module correctif $M_{n,i}$ multiplié par un facteur de pondération $z_n$, le facteur de pondération $z_n$ dépendant de l'objet 14. D'une façon générale, plus la valeur du facteur de pondération est élevée, plus rapidement la fonction évolue au voisinage du point image. La valeur du facteur de pondération $z_n$ dépend, par exemple, du matériau de l'objet auxiliaire ajouté. Par exemple, le facteur de pondération $z_n$ prend une valeur d'autant plus élevée que le matériau est dense, telle qu'une valeur sensiblement égale à 400 pour un os, et à 1000 pour du métal. L'ajustement de la valeur de ce coefficient permet d'obtenir un niveau d'intensité cohérent avec l'intensité des différents matériaux représentés dans le modèle volumique.

La fonction de correction $F_{n,i}$ vérifie alors :

$$F_{n,i}(P) = z_n \cdot M_{n,i}(P) \qquad (2)$$

Le module correctif $M_{n,i}$ est une fonction de la distance euclidienne $DIST(P, T_{n\text{->}IRM}(P_{n,i}))$, et cette fonction est continue et symétrique autour du point image, c'est-à-dire pour des valeurs autour de la distance nulle, ses valeurs étant en outre comprises entre 0 et 1.

Lorsque l'objet 14 est un objet destiné à être ajouté au modèle volumique 12, la valeur du module correctif $M_{n,i}$ est par exemple égale à 1 pour une valeur nulle de la distance euclidienne $DIST(P, T_{n\text{->}IRM}(P_{n,i}))$ entre le point image $T_{n\text{->}IRM}(P_{n,i})$ et le point P du modèle volumique 12, et la valeur du module correctif $M_{n,i}$ décroît vers 0 lorsque la valeur absolue de ladite distance euclidienne $DIST(P, T_{n\text{->}IRM}(P_{n,i}))$ augmente. Ainsi, lorsqu'on ajoute un objet physique au modèle, la fonction de correction est décroissante autour du point image. La valeur de la fonction, en un point du modèle, se rapproche d'autant plus de 0 que la distance entre ce point et le point image est élevée.

Lorsque l'objet 14 est un objet destiné à être soustrait au modèle volumique 12, par exemple dans le cas où l'objet 14 représente une zone de perçage, la valeur du module correctif $M_{n,i}$ est par exemple égale à 0 pour une valeur nulle de ladite distance euclidienne $DIST(P, T_{n\text{->}IRM}(P_{n,i}))$, et la valeur du module correctif $M_{n,i}$ croît vers 1 lorsque la valeur absolue de ladite distance euclidienne $DIST(P, T_{n\text{->}IRM}(P_{n,i}))$ augmente. Ainsi, lorsqu'on soustrait un objet physique au modèle, la fonction de correction est croissante autour du point image. La valeur de la fonction, en un point du modèle, se rapproche d'autant plus de 0 que la distance entre ce point et le point image est faible. Par soustraction d'un objet au modèle, on entend notamment l'exérèse d'une partie anatomique, par exemple une tumeur ou la simulation d'une craniotomie.

En complément et de manière facultative, le module correctif $M_{n,i}$ dépend en outre d'un facteur d'étalement $\mu_n$, le facteur d'étalement $\mu_n$ étant multiplié avec la distance euclidienne $DIST(P, T_{n\text{->}IRM}(P_{n,i}))$. Autrement dit, le facteur d'étalement $\mu_n$ est un paramètre permettant de modifier la focalisation de la fonction autour du point image. La valeur du facteur d'étalement $\mu_n$ est de préférence comprise entre 1 et 4. Le facteur d'étalement $\mu_n$ est, par exemple, égal à 1 pour représenter une électrode, et égal à 4 pour représenter un axe de repérage millimétrique, ou encore une zone de perçage.

Le module correctif $M_{n,i}$ vérifie alors, par exemple, l'équation suivante :

$$M_{n,i}(P) = \begin{cases} e^{-\mu_n \cdot DIST(P, T_{n\text{->}IRM}(P_{n,i}))^2}, & si\ \Gamma_n = 1 \\ (1 - e^{-\mu_n \cdot DIST(P, T_{n\text{->}IRM}(P_{n,i}))^2}), & si\ \Gamma_n = -1 \end{cases} \quad (3)$$

où n est un indice d'un objet 14 correspondant ;

i est un indice d'un point de l'objet 14 correspondant ;

$P_{n,i}$ représente les coordonnées du point d'indice i de l'objet 14 d'indice n dans le deuxième référentiel $R_n$ ;

$T_{n\text{->}IRM}$ représente la fonction de transfert du deuxième référentiel $R_n$ vers le premier référentiel $R_{IRM}$ ;

P représente les coordonnées du point du modèle volumique 12 dans le premier référentiel $R_{IRM}$ ;

DIST représente la distance euclidienne dans le premier référentiel $R_{IRM}$ ;

$\mu_n$ représente le facteur d'étalement ; et

$\Gamma_n$ est un paramètre de commande, égal à 1 lorsque l'objet 14 est un objet destiné à être ajouté, et égal à -1 lorsque l'objet 14 est un objet destiné à être soustrait.

La fonction de correction $F_{n,i}$ vérifie alors de préférence l'équation suivante, d'après les équations (2) et (3) précédentes :

$$F_{n,i}(P) = \begin{cases} z_n \cdot e^{-\mu_n \cdot DIST(P, T_{n\text{->}IRM}(P_{n,i}))^2}, & si\ \Gamma_n = 1 \\ z_n \cdot (1 - e^{-\mu_n \cdot DIST(P, T_{n\text{->}IRM}(P_{n,i}))^2}), & si\ \Gamma_n = -1 \\ 0, & si\ \Gamma_n = 0 \end{cases} \quad (4)$$

où le paramètre de commande $\Gamma_n$ est égal à 0 lorsque l'objet 14 est ignoré.

La fonction de correction $F_{n,i}$ est de préférence appliquée à chaque point P du modèle volumique 12 et pour chaque point d'indice i de chaque objet 14 d'indice n.

La fonction de correction précédemment décrite a la forme d'une Gaussienne. En variante, la fonction de correction $F_{n,i}$ est une fonction linéaire, au sens ou sa valeur varie linéairement autour du point image auquel elle est associée :

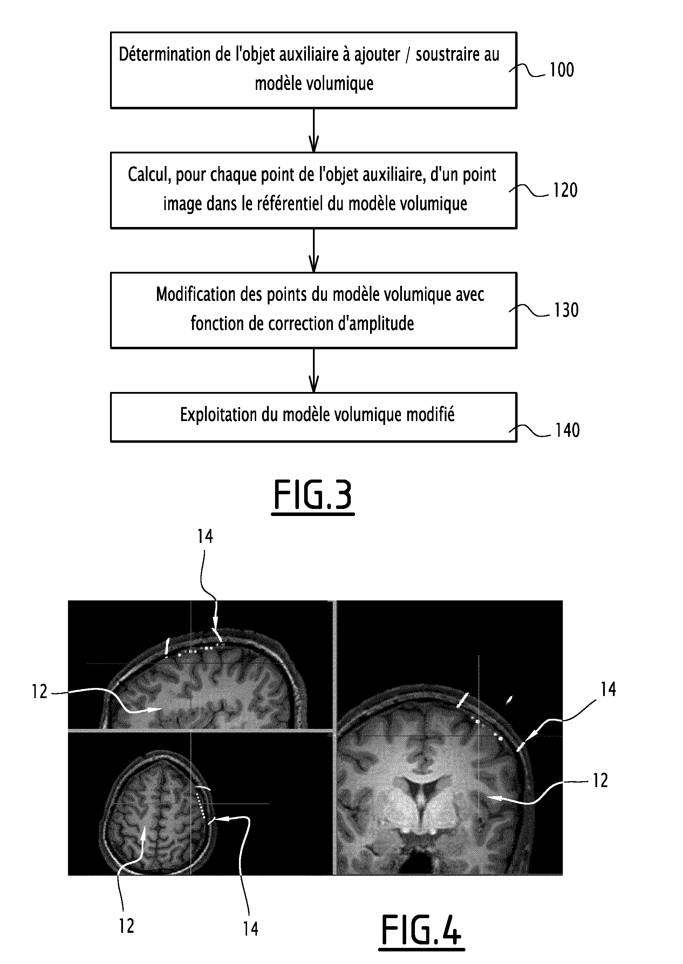

Le fonctionnement du système de traitement 10 selon l'invention va désormais être expliqué à l'aide de la figure 3 représentant un organigramme d'un procédé de traitement du modèle volumique 12 selon l'invention.

Lors de l'étape initiale 100, chaque objet 14 destiné à être ajouté ou bien soustrait au modèle volumique 12 est déterminé de données de placement de l'objet. En complément, l'objet 14 est déterminé à l'aide de données relatives à l'implant, lorsque l'objet 14 est un implant à ajouter dans un modèle anatomique, et à l'aide de données fonctionnelles. Lorsqu'une opération à effectuer sur le modèle volumique 12 consiste à ablater de la matière du modèle volumique, alors l'objet 14 est un objet à soustraire, et la forme de l'objet correspondant à la forme de l'ablation de matière.

Le procédé de traitement passe alors à l'étape 120 afin de calculer, pour chaque point $P_{n,i}$ de l'objet 14, le point image $T_{n\text{->}IRM}(P_{n,i})$ dans le premier référentiel $R_{IRM}$ à l'aide de la fonction de transfert $T_{n\text{->}IRM}$. À l'issue de l'étape 120, le modèle volumique 12 et les points image $T_{n\text{->}IRM}(P_{n,i})$ associés à l'objet 14 sont alors tous positionnés dans le premier référentiel $R_{IRM}$.

L'amplitude de certains points P du modèle volumiques 12, de préférence de tous les points P du modèle volumique 12, est alors, selon l'invention, modifiée lors de l'étape suivante 130 via la fonction de correction $F_{n,i}$, cette dernière étant notamment appliquée au voisinage de chaque point image. La fonction de correction $F_{n,i}$ appliquée au modèle volumique 12 est, à titre d'exemple, celle définie par l'équation (4).

Pour chaque point P du modèle volumique 12, la somme des fonctions $F_{n,i}$ associées aux différents points images de l'objet, est alors effectuée selon les équations suivantes, les objets 14 ajoutés et soustraits étant traités séparément :

$$\alpha(P) = \sum_{n,\Gamma_n = 1} \sum_i F_{n,i}(P) \tag{5}$$

$$\beta(P) = \sum_{n,\Gamma_n = -1} \sum_i F_{n,i}(P) \tag{6}$$

Puis, pour chaque point P du modèle volumique 12 qui possède une valeur d'origine de l'amplitude, notée $v_{origin}$, la valeur modifiée de l'intensité, notée $v_{fusion}$, est calculée à l'aide des équations suivantes :

$$v_{\text{int}}(P) = \min(v_{origin}(P), \beta(P)) \tag{7}$$

$$v_{fusion}(P) = \max(v_{\text{int}}(P), \alpha(P)) \tag{8}$$

L'équation (7) permet d'abord de retrancher les objets 14 destinés à être soustraits pour calculer une valeur intermédiaire $v_{int}$, puis l'équation (8) permet d'additionner les objets 14 destinés à être ajoutés pour calculer la valeur modifiée de l'amplitude $v_{fusion}$.

Autrement dit, le procédé selon l'invention comporte, à titre d'exemple, pour tout ou partie des points P du modèle volumique, les étapes suivantes :

- la sommation de chaque fonction $F_{n,i}$ associée à chaque point image $T_{n\text{->}IRM}(P_{n,i})$
- la comparaison entre l'intensité du point avant et après application de la fonction, l'intensité la plus faible, ou respectivement la plus élevée, étant retenue en cas de retrait, ou respectivement d'ajout, de l'objet.

Les données correspondant au modèle volumique 12 modifié à l'aide de la fonction de correction d'amplitude sont en complément, lors de l'étape 140, transmises à un autre appareil, telle qu'un robot d'assistance chirurgical, afin d'être exploitées. Lesdites données transmises sont par exemple des vues en coupe au format DICOM, notées $C_{DICOM}$, comme représenté sur la figure 2.

En variante ou en complément, l'exploitation des données correspondant au modèle volumique 12 modifié consiste en l'affichage du modèle volumique modifié sur l'écran d'affichage 18.

Le système de traitement 10 et le procédé de traitement selon l'invention permettent alors d'obtenir un meilleur rendu du modèle volumique 12 après ajout ou soustraction du ou des objets 14. On améliore la visibilité de chaque objet 14 intégré au modèle volumique 12.

Ceci permet alors *in fine* de mieux positionner chaque objet 14 lorsque le modèle volumique 12 est destiné à être affiché sur l'écran d'affichage 18 ou bien à être exploité par un autre appareil, telle qu'une station de chirurgie.

Dans le cas d'une application médicale liée au cerveau d'un patient, le système de traitement 10 et le procédé de traitement selon l'invention permettent par exemple de mieux positionner le ou les capteurs d'un système de commande neuronale directe, comme illustré à titre d'exemple sur les figures 4 à 6.

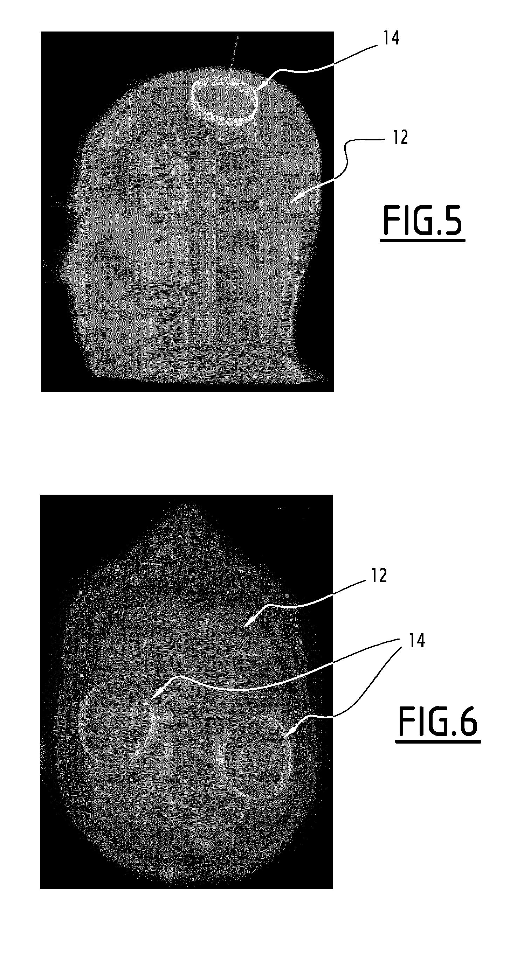

Sur les figures 4 à 6, les objets 14 sont chacun en forme d'un cylindre, et correspondent aux perçages qui devront être effectués dans la boîte crânienne du patient pour l'implantation de deux implants comportant chacun une matrice d'électrodes corticales, les emplacements des deux implants, ainsi que des matrices d'électrodes étant bien visibles sur la figure 6.

Précisons que lors de cet essai, le positionnement des matrices d'électrodes a été déterminé en utilisant un modèle anatomique intégrant des données de cartographies fonctionnelles corticales. Pour ce faire, le référentiel du modèle volumique a préalablement été converti dans le référentiel de Talairach, comme précédemment décrit.

On observe alors sur les différentes figures 4 à 6 que les objets 14 sont visibles de manière très nette sur le modèle volumique 12 quel que soit l'angle d'observation. L'objet 14 est représenté avec un niveau de gris proche de la couleur blanche, ce qui correspond à un objet à soustraire, les objets 14 étant dans cet exemple des perçages.

On conçoit ainsi que le système de traitement 10 et le procédé de traitement selon l'invention permettent d'obtenir un rendu plus précis du modèle 12 suite à l'ajout ou à la soustraction de chaque objet 14, notamment de visualiser plus précisément chaque objet 14 lorsque le modèle volumique 12 est un modèle d'imagerie destiné à être affiché sur l'écran 18.

Comme indiqué précédemment, selon une variante, le modèle volumique en trois dimensions prend en compte des informations fonctionnelles, également appelées données fonctionnelles, en plus de la structure anatomique.

Par information fonctionnelle, on entend la distribution spatiale, dans le modèle anatomique, d'un paramètre physiologique, ce paramètre étant par exemple :

- une reconstruction de densité de courants source neuronaux, cette reconstruction pouvant être obtenue sur la base de données de magnétoencéphalographie, également appelées données MEG, ou de données d'électroencéphalographie, également appelées données EEG ;

- une cartographie de type IRM fonctionnelle, (effet BOLD, de l'anglais *Blood Oxygen Level Dependent).*

## Revendications

1. Procédé de traitement d'un modèle volumique (12), notamment anatomique, avec au moins un objet (14) destiné à être ajouté ou soustrait audit modèle (12),
le modèle volumique (12) comportant un ensemble de points (P) disposés selon un maillage spatial, dans un premier référentiel ($R_{IRM}$), chacun desdits points (P) étant affecté d'une valeur d'intensité,
l'objet (14) comportant une pluralité de points ($P_{n,i}$) positionnés dans un deuxième référentiel ($R_n$) distinct du premier référentiel ($R_{IRM}$),
le procédé comprenant :

    - le calcul (120), pour chaque point ($P_{n,i}$) de l'objet (14), d'un point image ($T_{n->IRM}(P_{n,i})$) dans le premier référentiel ($R_{IRM}$) à l'aide d'une fonction ($T_{n->IRM}$) de transfert du deuxième référentiel ($R_n$) vers le premier référentiel ($R_{IRM}$) ;

    **caractérisé en ce qu'**il comprend en outre la modification (130) de l'intensité de points (P) du modèle volumique (12) par l'application d'une fonction de correction ($F_{n,i}$) associée à chaque point image ($T_{n->IRM}(P_{n,i})$),
    la valeur de la fonction de correction ($F_{n,i}$) en un point (P) du modèle volumique dépendant de la position dudit point (P) par rapport audit point image ($T_{n->IRM}(P_{n,i})$) auquel ladite fonction de correction ($F_{n,i}$) est associée.

2. Procédé selon la revendication 1, dans lequel le procédé comporte, pour tout ou partie des points (P) du modèle volumique (12), les étapes suivantes :

    - la sommation de chaque fonction ($F_{n,i}$) associée à chaque point image ($T_{n->IRM}(P_{n,i})$), et
    - la comparaison entre l'intensité du point avant et après sommation de chaque fonction, l'intensité la plus faible, ou respectivement la plus élevée, étant retenue en cas de soustraction, ou respectivement d'ajout, de l'objet.

3. Procédé selon la revendication 1 ou 2, dans lequel l'objet (14) est un objet destiné à être ajouté, et la fonction de correction ($F_{n,i}$) associée à chaque point image ($T_{n->IRM}(P_{n,i})$) est une fonction dont la valeur, en un point du modèle, se rapproche d'autant plus de 0 que la distance entre ce point du modèle et le point image ($T_{n->IRM}(P_{n,i})$) est élevée.

4. Procédé selon l'une quelconque des revendications précédentes, dans lequel lorsque l'objet (14) est un objet destiné à être soustrait, et la fonction de correction ($F_{n,i}$) associée à chaque point image ($T_{n->IRM}(P_{n,i})$) est une fonction dont la valeur, en un point du modèle, se rapproche d'autant plus de 0 que la distance entre ce point du modèle et le point image ($T_{n->IRM}(P_{n,i})$) est faible.

5. Procédé selon l'une quelconque des revendications précédentes, dans lequel la fonction de correction ($F_{n,i}$) associée à un point image ($T_{n->IRM}(P_{n,i})$) comporte un module correctif ($M_{n,i}$) dépendant de la distance, notamment euclidienne ($DIST(P, T_{n->IRM}(P_{n,i}))$), entre ledit point image ($T_{n->IRM}(P_{n,i})$) et le point (P) du modèle volumique dans le premier référentiel ($R_n$).

6. Procédé selon la revendication 5, dans lequel le module correctif ($M_{n,i}$) dépend en outre d'un facteur d'étalement ($\mu_n$), le facteur d'étalement ($\mu_n$) étant multiplié par ladite distance ($DIST(P, T_{n->IRM}(P_{n,i}))$), la valeur du facteur d'étalement ($\mu_n$) étant de préférence comprise entre 1 et 4.

7. Procédé selon l'une quelconque des revendications 5 à 6, dans lequel l'objet (14) est réalisé en un matériau, et dans lequel la fonction de correction ($F_{n,i}$) est égale au module correctif ($M_{n,i}$) multiplié par un facteur de pondération ($z_n$), le facteur de pondération ($z_n$) dépendant dudit matériau.

8. Procédé selon l'une quelconque des revendications 5 à 7, dans lequel le module correctif ($M_{n,i}$) est une fonction de la distance euclidienne ($DIST(P, T_{n->IRM}(P_{n,i}))$), fonction qui est continue, symétrique autour de la distance nulle et dont les valeurs sont comprises entre 0 et 1.

9. Procédé selon l'une quelconque des revendications 5 à 8, dans lequel lorsque l'objet (14) est un objet destiné à être ajouté, la valeur du module correctif ($M_{n,i}$) est égale à 1 pour une valeur nulle de la distance euclidienne ($DIST(P, T_{n->IRM}(P_{n,i}))$) entre le point image ($T_{n->IRM}(P_{n,i})$) et le point (P) du modèle volumique, et la valeur du module correctif ($M_{n,i}$) décroît vers 0 lorsque la valeur absolue de ladite distance euclidienne ($DIST(P, T_{n->IRM}(P_{n,i}))$) augmente, et dans lequel lorsque l'objet (14) est un objet destiné à être soustrait, la valeur du module correctif ($M_{n,i}$) est égale à 0 pour une valeur nulle de ladite distance euclidienne ($DIST(P, T_{n->IRM}(P_{n,i}))$), et la valeur du module correctif ($M_{n,i}$) croît vers 1 lorsque la valeur absolue de ladite distance euclidienne ($DIST(P, T_{n->IRM}(P_{n,i}))$) augmente.

10. Procédé selon l'une quelconque des revendications 5 à 9 prise avec la revendication 6, dans lequel le module correctif ($M_{n,i}$) vérifie l'équation suivante :

$$M_{n,i}(P) = \begin{cases} e^{-\mu_n \cdot DIST(P, T_{n->IRM}(P_{n,i}))^2}, & si \ \Gamma_n = 1 \\ (1 - e^{-\mu_n \cdot DIST(P, T_{n->IRM}(P_{n,i}))^2}), & si \ \Gamma_n = -1 \end{cases}$$

où n est un indice d'un objet (14) correspondant ;
i est un indice d'un point de l'objet (14) correspondant ;
$P_{n,i}$ représente les coordonnées du point d'indice i de l'objet d'indice n dans le deuxième référentiel ($R_n$) ;
$T_{n->IRM}$ représente la fonction de transfert du deuxième référentiel ($R_n$) vers le premier référentiel ($R_{IRM}$) ;
P représente les coordonnées du point du modèle volumique (12) dans le premier référentiel ($R_{IRM}$) ;
DIST représente la distance euclidienne dans le premier référentiel ($R_{IRM}$) ;
$\mu_n$ représente le facteur d'étalement ; et
$\Gamma_n$ est un paramètre de commande, égal à 1 lorsque l'objet (14) est un objet destiné à être ajouté, et égal à -1 lorsque l'objet (14) est un objet destiné à être soustrait.

11. Procédé selon l'une quelconque des revendications précédentes, dans lequel le modèle volumique (12) est un modèle d'imagerie, tel qu'un modèle anatomique, destiné à être affiché sur un écran (18).

12. Procédé selon l'une quelconque des revendications précédentes, dans lequel le modèle volumique (12) comporte une description d'une surface corticale, le premier référentiel ($R_{IRM}$) étant le référentiel de Talairach.

**13.** Procédé selon l'une quelconque des revendications précédentes, dans lequel le modèle volumique (12) comporte des informations fonctionnelles, et
l'étape de calcul (120), pour chaque point ($P_{n,i}$) de l'objet (14), d'un point image ($T_{n->IRM}(P_{n,i})$) dans le premier référentiel ($R_{IRM}$) est effectuée également en fonction desdites informations fonctionnelles.

**14.** Produit programme d'ordinateur comportant des instructions logicielles qui, lorsqu'elles sont mises en oeuvre par un ordinateur, mettent en oeuvre le procédé selon l'une quelconque des revendications précédentes.

**15.** Système électronique (10) de traitement d'un modèle volumique (12), notamment anatomique, avec au moins un objet (14) destiné à être ajouté ou soustrait audit modèle (12), le modèle volumique (12) comportant un ensemble de points (P) disposés selon un maillage spatial dans un premier référentiel ($R_{IRM}$), chacun desdits points (P) étant affecté d'une valeur d'intensité, l'objet (14) comportant une pluralité de points ($P_{n,i}$) positionnés dans un deuxième référentiel ($R_n$) distinct du premier référentiel ($R_{IRM}$),
le système comprenant :

- des moyens (24) de calcul, pour chaque point ($P_{n,i}$) de l'objet (14), d'un point image ($T_{n->IRM}(P_{n,i})$) dans le premier référentiel ($R_{IRM}$) à l'aide d'une fonction de transfert ($T_{n->IRM}$) du deuxième référentiel ($R_n$) vers le premier référentiel ($R_{IRM}$) ;

**caractérisé en ce qu'**il comprend en outre des moyens (26) de modification de l'intensité de points (P) du modèle volumique (12) par l'application d'une fonction de correction ($F_{n,i}$) associée à chaque point image ($T_{n->IRM}(P_{n,i})$), la valeur de la fonction de correction ($F_{n,i}$) en un point (P) du modèle volumique (12) dépendant de la position dudit point (P) par rapport audit point image ($T_{n->IRM}(P_{n,i})$) auquel la fonction de correction ($F_{n,i}$) est associée.

FIG.1

Référentiel initial
de l'objet — $R_0$

Tn → IRM

Référentiel de Talairach — $R_{Tal}$

Tn → IRM

Référentiel du modèle volumique — $R_{IRM}$

$C_{DICOM}$

$C_{DICOM}$

$C_{DICOM}$

FIG.2

Détermination de l'objet auxiliaire à ajouter / soustraire au modèle volumique ⟋⌒ 100

Calcul, pour chaque point de l'objet auxiliaire, d'un point image dans le référentiel du modèle volumique ⟋⌒ 120

Modification des points du modèle volumique avec fonction de correction d'amplitude ⟋⌒ 130

Exploitation du modèle volumique modifié ⟋⌒ 140

## FIG.3

## FIG.4

14

12

FIG.5

12

14

FIG.6